# EUROPÄISCHE PATENTSCHRIFT

(11) **EP 1 165 263 B1**
(45) Veröffentlichungstag und Bekanntmachung des Hinweises auf die Patenterteilung: **14.05.2003**
(21) Anmeldenummer: 00929229.3
(22) Anmeldetag: 17.03.2000
(51) Int. Cl.: B21B 37/00, G05B 19/418

(54) **LEITSYSTEM FÜR EIN WALZWERK, INSBESONDERE FÜR EINE WALZSTRASSE**
GUIDE SYSTEM FOR A ROLLING MILL, ESPECIALLY FOR A MILL TRAIN
SYSTEME DE GUIDAGE POUR LAMINOIR, NOTAMMENT POUR TRAIN DE LAMINOIR

(30) Priorität: 01.04.1999 DE 19914987
(43) Veröffentlichungstag der Anmeldung: 02.01.2002
(73) Patentinhaber: SIEMENS AKTIENGESELLSCHAFT, 80333 München (DE)
(72) Erfinder: SOPP, Peter, D-90482 Nürnberg (DE); STEIDL, Siegbert, D-91074 Herzogenaurach (DE)
(86) Internationale Anmeldenummer: DE0000837
(87) Internationale Veröffentlichungsnummer: WO00059651

(56) Entgegenhaltungen:
- WO-A-97/50021
- DE-A- 4 127 531
- ADAMS J L ET AL: "MODERNIZATION OF GREAT LAKES' 80-IN. HOT STRIP MILL" IRON AND STEEL ENGINEER,US,ASSOCIATION OF IRON AND STEEL ENGINEERS. PITTSBURGH, Bd. 70, Nr. 12, 1. Dezember 1993 (1993-12-01), Seiten 27-35, XP000425809 ISSN: 0021-1559

## Beschreibung

Die Erfindung betrifft ein Leitsystem für ein Walzwerk, insbesondere eine Walzstraße, wobei das Walzwerk, insbesondere die Walzstraße, zumindest ein mittels eines Antriebssystems angetriebenes Walzgerüst aufweist, und wobei das Leitsystem ein Automatisierungsgerät zum Steuern und/oder Regeln des Walzgerüstes aufweist, sowie ein Verfahren zum Betrieb eines ein derartiges Leitsystem aufweisenden Walzwerks, insbesondere einer Walzstraße.

Aus dem Dokument WO 97/50021 A1 ist ein Verfahren und System zur Inbetriebsetzung von Industrieanlagen mit einem Anlagenleitsystem bekannt. Das Anlagenleitsystem, das Non-Controlfunktionen und Controlfunktionen durchführt, ist mit einer separaten Datenleitung mit einer ,Technologiezentrale verbunden. Diese separate Datenleitung wird zur Fernübertragung von Daten, welche zur Inbetriebsetzung der Non-Controlfunktionen und Controlfunktionen dienen, verwendet. Die Problematik der Inbetriebsetzung einzelner Komponenten, z.B. Antriebssysteme oder Automatisierungsgeräte, werden in dem Dokument WO 97/50021 A1 nicht beschrieben.

Es ist üblich, zur Inbetriebsetzung einzelner Komponenten eines Walzwerks bzw. einer Walzstraße diese datentechnisch mit einem Inbetriebsetzungsrechner zu verbinden und durch Überspielen von Programmcode oder Betriebsparametern in Betrieb zu setzen. Nach Abschluß dieses Verfahrens wird dieser Vorgang mit der nächsten Anlagenkomponente wiederholt. Anlagenkomponenten in diesem Sinne können z.B. Antriebssysteme oder Automatisierungsgeräte sein. Auch bei Austausch einzelner, z.B. defekter, Komponenten wird die neue Komponente, z.B. ein neues Automatisierungsgerät oder ein neues Antriebssystem, entsprechend in Betrieb gesetzt.

Es ist Aufgabe, die Inbetriebsetzung zu verbessern.

Die Aufgabe wird erfindungsgemäß durch ein Leitsystem gemäß Anspruch 1, ein Walzwerk, insbesondere eine Walzstraße, gemäß Anspruch 9 bzw. ein Verfahren gemäß Anspruch 10 gelöst. Dabei ist für ein Walzwerk, insbesondere eine Walzstraße, das zumindest ein mittels eines Antriebssystems angetriebenes Walzgerüst und ein Leitsystem mit zumindest einem Automatisierungsgerät zum Steuern und/oder Regeln des Walzgerüstes aufweist, vorgesehen, daß das Leitsystem einen Inbetriebsetzungsrechner zur Inbetriebnahme des Antriebssystems und des Automatisierungsgerätes aufweist. Gemäß dem erfindungsgemäßen Verfahrens erfolgt die Inbetriebsetzung des Antriebssystems und des Automatisierungsgerätes mittels des Inbetriebsetzungsrechners. Das Leitsystem weist zumindest ein Bussystem zur Übertragung von Betriebsparametern und/oder Programmcode von dem Inbetriebsetzungsrechner zu zumindest einer der Komponenten Antriebssystem, Automatisierungsgerät auf. Des Weiteren ist das Bussystem zur Übertragung von zum Betrieb des Walzwerks, insbesondere der Walzstraße, notwendigen Informationen zwischen dem Antriebssystem und Automatisierungsgerät ausgebildet.

In vorteilhafter Ausgestaltung der Erfindung weist das Leitsystem einen Bedienrechner zur Überwachung und/oder Beeinflussung des Walzwerks, insbesondere der Walzstraße, auf, wobei der Inbetriebsetzungsrechner zur Inbetriebnahme des Bedienrechners ausgebildet ist.

In besonders vorteilhafter Ausgestaltung der Erfindung ist das Bussystem zur Übertragung von Betriebsparametern und/oder Programmcode von dem Inbetriebsetzungsrechner zum Bedienrechner ausgebildet.

In besonders vorteilhafter Ausgestaltung der Erfindung ist das Bussystem zur Übertragung von zum Betrieb des Walzwerks, insbesondere der Walzstraße, notwendigen Informationen zwischen dem Bedienrechnern und zumindest einer der Komponenten Antriebssystem und Automatisierungsgerät ausgebildet.

In weiterhin vorteilhafter Ausgestaltung der Erfindung weist das Leitsystem zumindest ein den Inbetriebsetzungsrechner und das Automatisierungsgerät datentechnisch verbindendes erstes Bussystem zur Übertragung von Betriebsparametern und/oder Programmcode von dem Inbetriebsetzungsrechner zum Automatisierungsgerät und zumindest ein das Automatisierungsgerät und das Antriebssystem datentechnisch verbindendes zweites Bussystem zur Übertragung von Betriebsparametern und/oder Programmcode zum Antriebssystem auf. In weiterhin vorteilhafter Ausgestaltung der Erfindung ist das zweite Bussystem zur Übertragung von zum Betrieb des Walzwerks, insbesondere der Walzstraße, notwendigen Informationen zwischen dem Automatisierungsgerät und dem Antriebssystem ausgebildet.

In weiterhin vorteilhafter Ausgestaltung der Erfindung weist das Leitsystem einen Bedienrechner zur Überwachung und/oder Beeinflussung des Walzwerks, insbesondere der Walzstraße, auf, wobei der Bedienrechner datentechnisch mit dem ersten Bussystem verbunden ist, und wobei das erste Bussystem zur Übertragung von zum Betrieb des Walzwerks, insbesondere der Walzstraße, notwendigen Informationen zwischen dem Bedienrechner und dem Automatisierungsgerät ausgebildet ist.

In weiterhin vorteilhafter Ausgestaltung der Erfindung weist das Leitsystem zumindest zwei Automatisierungsgeräte unterschiedlicher Bauart auf, wobei der Inbetriebsetzungsrechner zur Inbetriebnahme beider Automatisierungsgeräte ausgebildet ist.

Weitere Vorteile und Einzelheiten ergeben sich aus der nachfolgenden Beschreibung eines Ausführungsbeispiels.

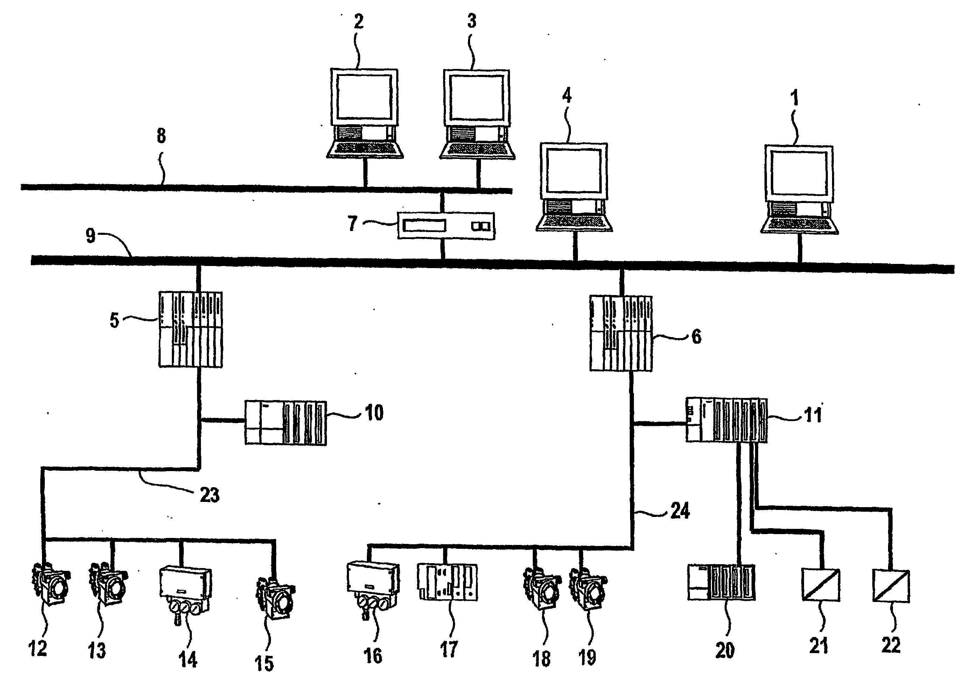

Die Figur zeigt ein Leitsystem in beispielhafter Ausgestaltung. Dabei ist Industrial-Ethernet-Bus 9 vorgesehen, das zwei gleich oder unterschiedlich ausgestaltete Automatisierungsgeräte 5 und 6, einen Bedienrechner 4 sowie einen Inbetriebsetzungsrechner 1 datentechnisch miteinander verbindet. Über einen Rechner 7 ist der Industrial-Ethernet-Bus 9 mit einem Standard-Ethernet-Bus 8 verbunden. Mit dem Standard-Ethernet-Bus 8 sind ein Bedienrechner 2 und ein zentraler Bedienrechner 3 verbunden. Über die Bedienrechner 2 und 4 sind Teile des Walzwerks bzw. Teile der Walzstraße bedienbar. Mittels des zentralen Bedienrechners 3 ist das Zusammenwirken einzelner Anlagenteile des Walzwerks bzw. der Walzstraße bedienbar. Über ein Bussystem 23, das als Profibus ausgebildet ist, sind verschiedene Aktoren oder Sensoren 12, 13, 14, 15 datentechnisch mit dem Automatisierungsgerät 5 verbunden. Ferner ist eine dezentrale Peripherie 10 über das Bussystem 23 mit dem Automatisierungsgerät 5 verbunden. Über ein Bussystem 24, das als Profibus ausgebildet ist, sind verschiedene Aktoren oder Sensoren 16,17, 18, 19 datentechnisch mit dem Automatisierungsgerät 6 verbunden. Ferner ist eine dezentrale Peripherie 11 über das Bussystem 24 mit dem Automatisierungsgerät 6 verbunden.

Über die dezentrale Peripherie 11 sind verschiedene Aktoren und Sensoren 20, 21, 22 über das Automatisierungsgerät 6 ansteuerbar bzw. auswertbar.

Die Bedienrechner 2, 3, 4, die Automatisierungsgeräte 5, 6, die dezentralen Peripherien 10, 11, die Aktoren bzw. Sensoren 12, 13, 14, 15, 16, 17, 18, 19, 20, 21, 22 sowie die Bussysteme 8, 9, 23, 24 dienen dem Betrieb des Walzwerks bzw. der Walzstraße. Ferner werden für die Inbetriebsetzung notwendige Informationen wie etwa Betriebsparameter oder Programmcodes, also Software, vom Inbetriebsetzungsrechner 1 zu den Automatisierungsgeräten 5, 6, den dezentralen Peripherien 10 und 11 sowie zu den Aktoren bzw. Sensoren 12, 13, 14, 15, 16, 17, 18, 19, 20, 21, 22 und ggf. zu den Bedienrechnern 2, 3, 4 übertragen. Die Übertragung der Inbetriebsetzungsinformationen erfolgt über die entsprechenden Bussysteme 8, 9, 23 und 24.

Es kann ferner noch vorgesehen werden, daß der Inbetriebsetzungsrechner 1 zur Entwicklung des Leitsystems verwendet wird.

Es ist von Vorteil, vorzusehen, daß Diagnoseinformationen über die Betriebsfähigkeit der Automatisierungsgeräte 5, 6 der dezentralen Peripherien 10, 11 der Aktoren bzw. Sensoren 12, 13, 14, 15, 16, 17, 18, 19, 20, 21, 22 und ggf. der Bedienrechner 2 und 4 an die Bedienrechner 2, 3 und 4 übertragen werden.

Die Sensoren und Aktoren 12, 13, 14, 15, 16, 17, 18, 19, 20, 21, 22 dienen beispielhaft zur Steuerung bzw. Regelung von Antriebssystemen für Walzgerüste, von Kühlstrecken, von Haspeln oder Schlingenhebern.

## Patentansprüche

1. Leitsystem für ein Walzwerk, insbesondere eine Walzstraße, wobei das Walzwerk, insbesondere die Walzstraße, zumindest ein mittels eines Antriebssystems angetriebenes Walzgerüst aufweist, und wobei das Leitsystem ein Automatisierungsgerät (5, 6) zum Steuern und/oder Regeln des Walzgerüstes und einen Inbetriebsetzungsrechner (1) aufweist,
**dadurch gekennzeichnet,**
**daß**
(i) der Inbetriebsetzungsrechner (1) zur Inbetriebnahme des Antriebssystems und des Automatisierungsgerätes (5, 6) ausgebildet ist,
(ii) es zumindest ein Bussystem (8, 9, 23, 24) zur Übertragung von Betriebsparametern und/oder Programmcode von dem Inbetriebsetzungsrechner (1) zu zumindest einer der Komponenten Antriebssystem und Automatisierungsgerät (5, 6) aufweist, und
(iii) dass das Bussystem (8, 9, 23, 24) zur Übertragung von zum Betrieb des Walzwerks, insbesondere der Walzstraße, notwendigen Informationen zwischen dem Antriebssystem und Automatisierungsgerät (5, 6) ausgebildet ist.

2. Leitsystem nach Anspruch 1, wobei es einen Bedienrechner (4) zur Überwachung und/oder Beeinflussung des Walzwerks, insbesondere der Walzstraße, aufweist,
**dadurch gekennzeichnet,**
**daß** der Inbetriebsetzungsrechner (1) zur Inbetriebnahme des Bedienrechners (4) ausgebildet ist.

3. Leitsystem nach Anspruch 2,
**dadurch gekennzeichnet,**
**daß** das Bussystem (8, 9, 23, 24) zur Übertragung von Betriebsparametern und/oder Programmcode von dem Inbetriebsetzungsrechner zum Bedienrechner (4) ausgebildet ist.

4. Leitsystem nach Anspruch 3,
**dadurch gekennzeichnet,**
**daß** das Bussystem (8, 9, 23, 24) zur Übertragung von zum Betrieb des Walzwerks, insbesondere der Walzstraße, notwendigen Informationen zwischen dem Bedienrechner (4) und zumindest einer der Komponenten Antriebssystem und Automatisierungsgerät (5, 6) ausgebildet ist.

5. Leitsystem nach Anspruch 3 oder 4,
**dadurch gekennzeichnet,**
**daß** es zumindest ein den Inbetriebsetzungsrechner (1) und das Automatisierungsgerät (5, 6) datentechnisch verbindendes erstes Bussystem (9) zur Übertragung von Betriebsparametern und/oder Programmcode von dem Inbetriebsetzungsrechner (1) zum Automatisierungsgerät (5, 6) und zumindest ein das Automatisierungsgerät (5, 6) und das Antriebssystem datentechnisch verbindendes zweites Bussystem (23, 24) zur Übertragung von Betriebsparametern und/oder Programmcode zum Antriebssystem aufweist.

6. Leitsystem nach Anspruch 5,
**dadurch gekennzeichnet,**
**daß** das zweite Bussystem (23, 24) zur Übertragung von zum Betrieb des Walzwerks, insbesondere der Walzstraße, notwendigen Informationen zwischen dem Automatisierungsgerät (5, 6) und dem Antriebssystem ausgebildet ist.

7. Leitsystem nach Anspruch 5 oder 6, wobei es einen Bedienrechner (4) zur Überwachung und/oder Beeinflussung des Walzwerks, insbesondere der Walzstraße, aufweist,
**dadurch gekennzeichnet,**
**daß** der Bedienrechner (4) datentechnisch mit dem ersten Bussystem (9) verbunden ist, und daß das erste Bussystem (9) zur Übertragung von zum Betrieb des Walzwerks, insbesondere der Walzstraße, notwendigen Informationen zwischen dem Bedienrechner (4) und dem Automatisierungsgerät (5, 6) ausgebildet ist.

8. Leitsystem nach einem der vorhergehenden Ansprüche,
**dadurch gekennzeichnet, daß** es zumindest zwei Automatisierungsgeräte (5, 6) unterschiedlicher Bauart aufweist und daß der Inbetriebsetzungsrechner (1) zur Inbetriebnahme beider Automatisierungsgeräte (5, 6) ausgebildet ist.

9. Walzwerk, insbesondere eine Walzstraße, wobei das Walzwerk, insbesondere die Walzstraße, zumindest ein mittels eines Antriebssystems angetriebenes Walzgerüst und ein Leitsystem mit einem Automatisierungsgerät (5, 6) zum Steuern und/oder Regeln des Walzgerüstes und einen Inbetriebsetzungsrechner (1) aufweist,
**dadurch gekennzeichnet,**
**daß**
(i) der Inbetriebsetzungsrechner (1) zur Inbetriebnahme des Antriebssystems und des Automatisierungsgerätes (5, 6) ausgebildet ist,
(ii) es zumindest ein Bussystem (8, 9, 23, 24) zur Übertragung von Betriebsparametern und/oder Programmcode von dem Inbetriebsetzungsrechner (1) zu zumindest einer der Komponenten Antriebssystem und Automatisierungsgerät (5, 6) aufweist, und
(iii) dass das Bussystem (8, 9, 23, 24) zur Übertragung von zum Betrieb des Walzwerks, insbesondere der Walzstraße, notwendigen Informationen zwischen dem Antriebssystem und Automatisierungsgerät (5, 6) ausgebildet ist.

10. Verfahren zum Betrieb eines Walzwerkes, insbesondere einer Walzstraße, mittels eines Leitsystems nach einem der vorhergehenden Ansprüche, wobei das Walzwerk, insbesondere der Walzstraße, zumindest ein mittels eines Antriebssystems angetriebenes Walzgerüst aufweist, und wobei das Leitsystem ein Automatisierungsgerät (5, 6)zum Steuern und/oder Regeln des Walzgerüstes und einen Inbetriebsetzungsrechner (1) aufweist,
**dadurch gekennzeichnet,**
**daß** die Inbetriebsetzung des Antriebssystems und des Automatisierungsgerätes (5, 6) mittels ein und demselben Inbetriebsetzungsrechner (1) und einem Bussystem (8, 9, 23, 24) zur Übertragung von Betriebsparametern und/oder Programmcode von dem Inbetriebsetzungsrechner (1) zu zumindest einer der Komponenten Antriebssystem und Automatisierungsgerät (5, 6) und von zum Betrieb des Walzwerks, insbesondere der Walzstraße, notwendigen Informationen zwischen dem Antriebssystem und Automatisierungsgerät (5, 6) erfolgt.

## Claims

1. Master control system for a rolling mill, especially a mill train, the rolling mill, especially the mill train, having at least one rolling stand driven by means of a drive system, and the master control system having an automation device (5, 6) for the open-loop and/or closed-loop control of the rolling stand and a commissioning computer (1), **characterized in that**
(i) the commissioning computer (1) is designed for the commissioning of the drive system and of the automation device (5, 6) and
(ii) has at least one bus system (8, 9, 23, 24) for the transmission of operating parameters and/or program code from the commissioning computer (1) to at least one of the components comprising the drive system and the automation device (5, 6), and
(iii) **in that** the bus system (8, 9, 23, 24) is designed for the transmission of information necessary for the operation of the rolling mill, especially the mill train, between the drive system and the automation device (5, 6).

2. Master control system according to Claim 1, it having an operator-control computer (4) for monitoring and/or influencing the rolling mill, especially the mill train, **characterized in that** the commissioning computer (1) is designed for the commissioning of the operator-control computer (4).

3. Master control system according to Claim 2, **characterized in that** the bus system (8, 9, 23, 24) is designed for the transmission of operating parameters and/or program code from the commissioning computer to the operator-control computer (4).

4. Master control system according to Claim 3, **characterized in that** the bus system (8, 9, 23, 24) is designed for the transmission of information necessary for the operation of the rolling mill, especially the mill train, between the operator-control computer (4) and at least one of the components comprising the drive system and the automation device (5, 6).

5. Master control system according to claim 3 or 4, **characterized in that** it has at least one first bus system (9) for the transmission of operating parameters and/or program code from the commissioning computer (1) to the automation device (5, 6), connecting the commissioning computer (1) and the automation device (5, 6) by a data link, and has at least one second bus system (23, 24) for the transmission of operating parameters and/or program code to the drive system, connecting the automation device (5, 6) and the drive system by a data link.

6. Master control system according to Claim 5, **characterized in that** the second bus system (23, 24) is designed for the transmission of information necessary for the operation of the rolling mill, especially the mill train, between the automation device (5, 6) and the drive system.

7. Master control system according to Claim 5 or 6, it having an operator-control computer (4) for monitoring and/or influencing the rolling mill, especially the mill train, **characterized in that** the operator-control computer (4) is connected to the first bus system (9) by a data link, and **in that** the first bus system (9) is designed for the transmission of information necessary for the operation of the rolling mill, especially the mill train, between the operator-control computer (4) and the automation device (5, 6).

8. Master control system according to one of the preceding claims, **characterized in that** it has at least two automation devices (5, 6) of different types and **in that** the commissioning computer (1) is designed for the commissioning of both automation devices (5, 6).

9. Rolling mill, especially a mill train, the rolling mill, especially the mill train, having at least one rolling stand driven by means of a drive system and a master control system with an automation device (5, 6) for the open-loop and/or closed-loop control of the rolling stand and a commissioning computer (1), **characterized in that**
(i) the commissioning computer (1) is designed for the commissioning of the drive system and of the automation device (5, 6) and
(ii) has at least one bus system (8, 9, 23, 24) for the transmission of operating parameters and/or program code from the commissioning computer (1) to at least one of the components comprising the drive system and the automation device (5, 6), and
(iii) **in that** the bus system (8, 9, 23, 24) is designed for the transmission of information necessary for the operation of the rolling mill, especially the mill train, between the drive system and the automation device (5, 6).

10. Method of operating a rolling mill, especially a mill train, by means of a master control system according to one of the preceding claims, the rolling mill, especially the mill train, having at least one rolling stand driven by means of a drive system, and the master control system having an automation device (5, 6) for the open-loop and/or closed-loop control of the rolling stand and a commissioning computer (1), **characterized in that** the commissioning of the drive system and of the automation device (5, 6) takes place by means of one and the same commissioning computer (1) and a bus system (8, 9, 23, 24) for the transmission of operating parameters and/or program code from the commissioning computer (1) to at least one of the components comprising the drive system and the automation device (S, 6) and of information necessary for the operation of the rolling mill, especially the mill train, between the drive system and the automation device (5, 6).

## Revendications

1. Système de commande d'un laminoir, notamment d'un train de laminoir, le laminoir, notamment le train de laminoir, ayant au moins une cage de laminoir entraînée par un système d'entraînement, et le système de commande comprenant un appareil (5, 6) d'automatisation destiné à commander et/ou à réguler la cage de laminoir et un ordinateur (1) de mise en fonctionnement,
**caractérisé en ce que**
(i) le calculateur (1) de mise en fonctionnement est constitué pour la mise en fonctionnement du système d'entraînement et de l'appareil (5, 6) d'automatisation,
(ii) il présente au moins un système (8, 9, 23, 24) de bus de transmission de paramètres de fonctionnement et/ou de codes de programme de l'ordinateur (1) de mise en fonctionnement à au moins l'un des éléments que sont le système d'entraînement et l'appareil (5, 6) d'automatisation, et
(iii) **en ce que** le système (8, 9, 23, 24) de bus est constitué pour la transmission d'informations nécessaires au fonctionnement du laminoir, notamment du train de laminoir, entre le système d'entraînement et l'appareil (5, 6) d'automatisation.

2. Système de commande suivant la revendication 1 qui a un ordinateur (4) de service destiné à surveiller et/ou à influencer le laminoir, notamment le train de laminoir,
**caractérisé en ce que** le calculateur (1) de mise en fonctionnement est constitué pour la mise en service pour la première fois de l'ordinateur (4) de service.

3. Système de commande suivant la revendication 2,
**caractérisé en ce que** le système (8, 9, 23, 24) de bus est constitué pour la transmission de paramètres de fonctionnement et/ou de codes de programme de l'ordinateur de mise en fonctionnement à l'ordinateur (4) de service.

4. Système de commande suivant la revendication 3,
**caractérisé en ce que** le système (8, 9, 23, 24) de bus est constitué pour la transmission d'informations nécessaires au fonctionnement du laminoir, notamment du train de laminoir, entre l'ordinateur (4) de service et au moins l'un des éléments que sont le système d'entraînement et l'appareil (5, 6) d'automatisation.

5. Système de commande suivant la revendication 3 ou 4,
**caractérisé en ce qu'**il comprend au moins un premier système (9) de bus reliant du point de vue informatique l'ordinateur (1) de mise en fonctionnement et l'appareil (5, 6) d'automatisation pour la transmission de paramètres de fonctionnement et/ou de codes de programme de l'ordinateur (1) de mise en fonctionnement à l'appareil (5, 6) d'automatisation, et au moins un deuxième système (23, 24) de bus reliant du point de vue informatique l'appareil (5, 6) d'automatisation et le système d'entraînement pour la transmission de paramètres de fonctionnement et/ou de codes de programme au système d'entraînement.

6. Système de commande suivant la revendication 5,
**caractérisé en ce que** le deuxième système (23, 24) de bus est constitué pour la transmission d'informations nécessaires au fonctionnement du laminoir, notamment du train de laminoir, entre l'appareil (5, 6) d'automatisation et le système d'entraînement.

7. Système de commande suivant la revendication 5 ou 6 qui comprend un ordinateur (4) de service destiné à surveiller et/ou à influencer le laminoir, notamment le train de laminoir,
**caractérisé en ce que** le calculateur (4) de service est relié du point de vue informatique au premier système (9) de bus, et **en ce que** le premier système (9) de bus est constitué pour la transmission d'informations nécessaires au fonctionnement du laminoir, notamment du train de laminoir, entre l'ordinateur (4) de service et l'appareil (5, 6) d'automatisation.

8. Système de commande suivant l'une des revendications précédentes,
**caractérisé en ce qu'**il a au moins deux appareils (5, 6) d'automatisation de types différents et **en ce que** l'ordinateur (1) de mise en fonctionnement est constitué pour la mise en service pour la première fois des deux appareils (5, 6) d'automatisation.

9. Laminoir, notamment train de laminoir, dans lequel le laminoir, notamment le train de laminoir, a au moins une cage de laminoir entraînée au moyen d'un système d'entraînement et un système de commande ayant un appareil (5, 6) d'automatisation destiné à commander et/ou à réguler la cage de laminoir et un ordinateur (1) de mise en fonctionnement,
**caractérisé en ce que**
(i) le calculateur (1) de mise en fonctionnement est constitué pour la mise en fonctionnement du système d'entraînement et de l'appareil (5, 6) d'automatisation,
(ii) il présente au moins un système (8, 9, 23, 24) de bus de transmission de paramètres de fonctionnement et/ou de codes de programme de l'ordinateur (1) de mise en fonctionnement à au moins l'un des éléments que sont le système d'entraînement et l'appareil (5, 6) d'automatisation, et
(iii) **en ce que** le système (8, 9, 23, 24) de bus est constitué pour la transmission d'informations nécessaires au fonctionnement du laminoir, notamment du train de laminoir, entre le système d'entraînement et l'appareil (5, 6) d'automatisation.

10. Procédé pour faire fonctionner un laminoir, notamment un train de laminoir, au moyen d'un système de commande suivant l'une des revendications précédentes, dans lequel le laminoir, notamment le train de laminoir, a au moins une cage de laminoir entraînée au moyen d'un système d'entraînement et dans lequel le système de commande a un appareil (5, 6) d'automatisation destiné à commander et/ou à réguler la cage de laminoir et un ordinateur (1) de mise en fonctionnement,
**caractérisé en ce que** la mise en fonctionnement du système d'entraînement et de l'appareil (5, 6) d'automatisation s'effectue au moyen d'un seul et même ordinateur (1) de mise en fonctionnement et d'un système (8, 9, 23, 24) de bus destiné à la transmission de paramètres de fonctionnement et/ou de codes de programme de l'ordinateur (1) de mise en fonctionnement à au moins l'un des éléments que sont le système d'entraînement et l'appareil (5, 6) d'automatisation et d'informations nécessaires au fonctionnement du laminoir, notamment du train de laminoir, entre le système d'entraînement et l'appareil (5, 6) d'automatisation.
